# DEMANDE DE BREVET EUROPEEN

(11) **EP 1 900 574 A1**
(43) Date de publication de la demande: **19.03.2008**
(21) Numéro de dépôt: 07301348.4
(22) Date de dépôt: 07.09.2007
(51) Int. Cl.: B60R 16/02

(54) **Dispositif de protection et d'aide au montage de cables électriques dans un corps creux de carrosserie de véhicule**

(30) Priorité: 13.09.2006 FR 0653704
(71) Demandeur: PEUGEOT CITROËN AUTOMOBILES S.A., 78140 Vélizy Villacoublay (FR)
(72) Inventeur: Vilain, Cyril, 90100 Dalle (FR)
(74) Mandataire: Vigand, Régis Louis Michel

(57) **Abrégé**

- Le dispositif est placé en sortie de corps creux (3), et présente deux parties :
- une première partie (5), sensiblement tubulaire, qui s'étend dans la section de sortie de corps creux (3) et hors de celle-ci et qui entoure les câbles électriques (2), de façon à les protéger des bords de la sortie de corps creux (3), et
- une seconde partie (6), qui s'étend vers l'intérieur du corps creux (1) entre la paroi interne du corps creux (1) et les câbles électriques (2), de façon à guider ces derniers vers la sortie de corps creux (3) lors de leur montage.

- Véhicules automobiles. Montage des câbles de batterie.

## Description

La présente invention concerne un dispositif de protection et d'aide au montage de câbles électriques dans un corps creux de carrosserie de véhicule. En particulier, les câbles électriques peuvent être des câbles de puissance de batterie qui cheminent dans la carrosserie du véhicule, entre la batterie du véhicule et le lieu de consommation de l'énergie de la batterie.

La carrosserie, renforcée à certains endroits, joue le rôle de coque autoporteuse du véhicule pour assurer la rigidité de l'ensemble. La coque, fabriquée à partir de tôles relativement minces, comporte de nombreux corps creux (bas de caisse, longerons, caissons de portes, etc.).

Les câbles de puissance de batterie cheminent, de préférence, dans différents corps creux de la carrosserie, ce qui a pour avantage de protéger les circuits électriques du véhicule des rayonnements électromagnétiques émis par le câble positif de batterie.

En sortie de corps creux, la structure métallique, par ses bords en tôle qui peuvent être tranchants, peut endommager la gaine des câbles, et les câbles eux-mêmes. Il y a donc nécessité de protéger les câbles en sortie de corps creux.

Selon l'art antérieur, on connaît déjà des protecteurs qui empêchent l'usure par abrasion des câbles électriques et qui n'affectent pas les caractéristiques de ces derniers.

Ainsi, la publication de la demande de brevet d'invention japonais n° 2005-080449, au nom de la société YAZAHI Corp., décrit un protecteur qui est placé sous le plancher d'un véhicule et à l'intérieur duquel se trouvent les câbles ou fils électriques à protéger. Un corps protecteur est réalisé à partir d'un matériau métallique. Des rainures plus étroites que le diamètre des câbles ou fils électriques à protéger sont formées sur la partie inférieure du corps protecteur. Sur le bord supérieur des rainures, il est prévu des parties de contact où les câbles et fils électriques sont branchés. Les parties de contact forment des parties courbes qui protègent les câbles et fils. Plusieurs câbles ou fils électriques sont mis en faisceau. Les câbles ou fils qui constituent le faisceau sont rangés à l'intérieur de la partie de rangement du corps protecteur. Le matériau métallique est utilisé pour faire un cache qui est monté sur le corps protecteur.

La publication de la demande de brevet d'invention japonais n° 53-018113, au nom de la société HITACHI Ltd, décrit un collecteur (gouttière) de câble ou fil électrique monté sur le châssis d'un véhicule, dans lequel un dispositif de support d'un cache est disposé dans une partie supérieure. Une planchette, utilisée pour le cache, est montée sur un support.

On connaît également, selon le brevet des Etats-Unis d'Amérique n° 5 631 444 au nom de la société DAIMLER-BENTZ Aerospace AIRBUS GmbH, un ensemble de câble et de connecteur de câble, qui comporte un câble électrique, un boîtier de câble électriquement conducteur dans lequel est logé le câble électrique, un connecteur de câble, et un dispositif de mise à la terre du boîtier de façon à protéger l'ensemble de la foudre. Le dispositif de mise à la terre comporte un manchon de mise à la terre électriquement conducteur, qui est en contact électrique avec le boîtier et le connecteur de câble pour les mettre tous les deux à la terre. Il comporte aussi au moins une patte de mise à la terre faisant partie intégrante du manchon. La patte de mise à la terre comporte des moyens de liaison électrique d'un conducteur de mise à la terre au boîtier par l'intermédiaire du manchon avec sa patte intégrée. Le connecteur de câble comprend un organe support creux, en matériau électriquement conducteur, situé à l'intérieur du manchon. L'organe support a une extrémité de couplage et une extrémité interne, entourée par le boîtier qui, à son tour, est entouré par le manchon de manière à bloquer le boîtier entre l'organe support et le manchon. L'ensemble comporte, de plus, un tuyau souple de protection isolé électriquement, qui enferme le câble et est entouré par le boîtier formé comme un treillis à trame de câble conducteur entourant le tuyau de protection.

Le but de la présente invention est de perfectionner les moyens de protection connus de l'art antérieur, en réalisant un dispositif apte à la fois à protéger des câbles en sortie de corps creux et à faciliter leur montage dans lesdits corps creux.

Un autre but de la présente invention est de réaliser un tel dispositif qui permette, lors du montage des câbles dans les corps creux, leur récupération très facile hors desdits corps creux, et donc un gain de temps substantiel lors de cette opération de montage.

Un autre but de la présente invention est de réaliser un tel dispositif qui soit de conception simple, de fabrication également simple, de montage aisé, qui soit un dispositif robuste, fiable, et économique.

C'est également un but de la présente invention de réaliser un tel dispositif qui puisse être utilisé sur des véhicules hybrides ayant des batteries de puissance supérieure à 12 volts.

Pour parvenir à ces buts, la présente invention conçoit un nouveau dispositif de protection et d'aide au montage de câbles électriques dans un corps creux de carrosserie d'un véhicule, qui est placé en sortie du corps creux, et qui présente deux parties :
- une première partie, sensiblement tubulaire, qui s'étend dans la section de sortie de corps creux et hors de celle-ci et qui entoure les câbles électriques, de façon à les protéger des bords de la sortie de corps creux, et
- une seconde partie, qui s'étend vers l'intérieur du corps creux entre la paroi interne du corps creux et les câbles électriques, de façon à guider ces derniers vers la sortie de corps creux lors de leur montage.

Selon un mode préféré de réalisation de l'invention, le dispositif est clippé sur le corps creux, au niveau de la sortie de corps creux.

De préférence, la première partie et la seconde partie du dispositif sont formées « monobloc ».

Selon un mode de réalisation préféré de l'invention également, la seconde partie présente la forme d'une plaque en secteur d'enveloppe cylindrique d'angle inférieur à 180°, placée par rapport aux câbles électriques du côté opposé à la direction de cheminement des câbles électriques après la sortie de corps creux.

De préférence, la seconde partie est plus longue que la première partie, selon l'axe longitudinal du dispositif.

Les câbles électriques sont avantageusement les câbles de puissance de batterie d'un véhicule.

Le corps creux est, de préférence, un élément de carrosserie en corps creux choisi parmi les éléments suivants de véhicule: longerons, bas de caisse, caissons de porte.

La présente invention conçoit également un nouveau procédé de montage de câbles électriques dans un corps creux de carrosserie d'un véhicule, dans lequel on fait glisser les câbles dans le corps creux jusqu'à la sortie de corps creux équipée d'un dispositif de protection et d'aide au montage conforme au dispositif exposé ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective, schématisée, illustrant le cheminement de câbles de batterie dans un corps creux de carrosserie de véhicule,
- la figure 2 est une vue frontale en perspective du dispositif de protection et d'aide au montage, selon la présente invention,
- la figure 3 est une vue de côté (selon la direction de la flèche A de la figure 2), en perspective, du dispositif de protection et d'aide au montage, selon la présente invention, et
- la figure 4 est une vue de dessous, en perspective, d'éléments de carrosserie d'un véhicule, illustrant la position du dispositif selon la présente invention.

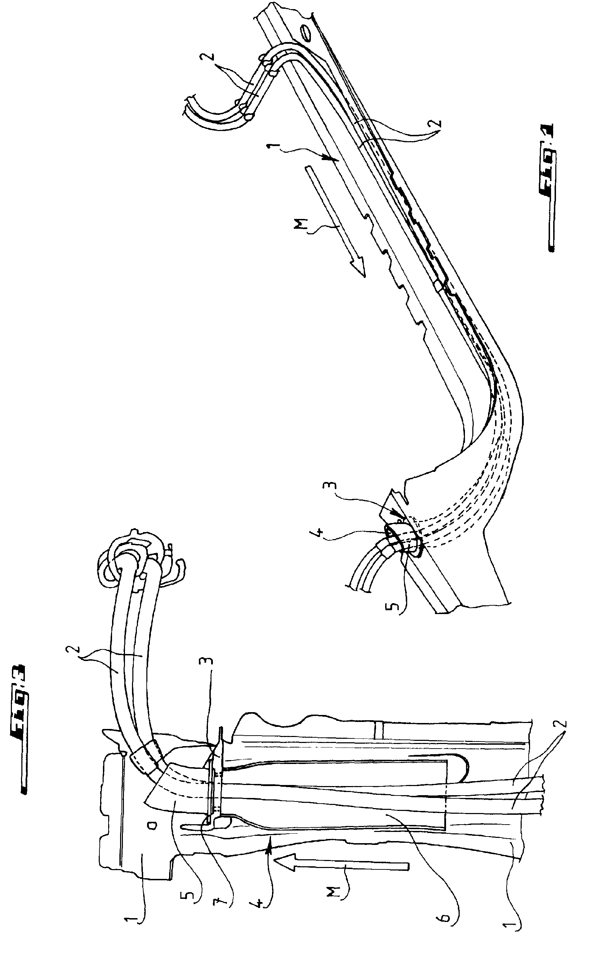

En référence à la figure 1, on a représenté, de manière schématique, un élément de carrosserie à configuration de corps creux , de référence 1, qui peut être un longeron, un bas de caisse, un caisson de porte, ou un autre élément de carrosserie ou de châssis. Dans cet élément de carrosserie à corps creux 1 cheminent des câbles de puissance 2 de la batterie du véhicule (non représenté). Ces câbles de puissance 2 sortent du corps creux 1 au niveau d'une ouverture ou section dans l'élément de carrosserie, désignée « sortie de corps creux » et référencée 3.

Comme déjà évoqué précédemment, le cheminement des câbles de puissance 2 dans le corps creux 1 permet de protéger les circuits électriques et les composants électroniques du véhicule des rayonnements électromagnétiques émis par le câble positif de batterie; en effet, les câbles de la batterie peuvent, par la puissance positive permanente qu'ils émettent, altérer les signaux électriques et électroniques des différents calculateurs embarqués et provoquer des courts-circuits aggravés (CCA) responsables de nombreuses pannes clientèle. Le cheminement des câbles de puissance 2 dans le corps creux 1 permet de créer un effet de « cage de Faraday ». La paroi du corps creux forme une enveloppe continue d'un matériau conducteur. Non seulement les ondes et les courants électriques circulent sur l'enveloppe du corps creux sans pouvoir pénétrer, mais surtout les ondes électromagnétiques émises par le câble émetteur qui circule dans le corps creux sont empêchées de sortir ; ce qui évite les « interférences », et supprime les risques de CCA.

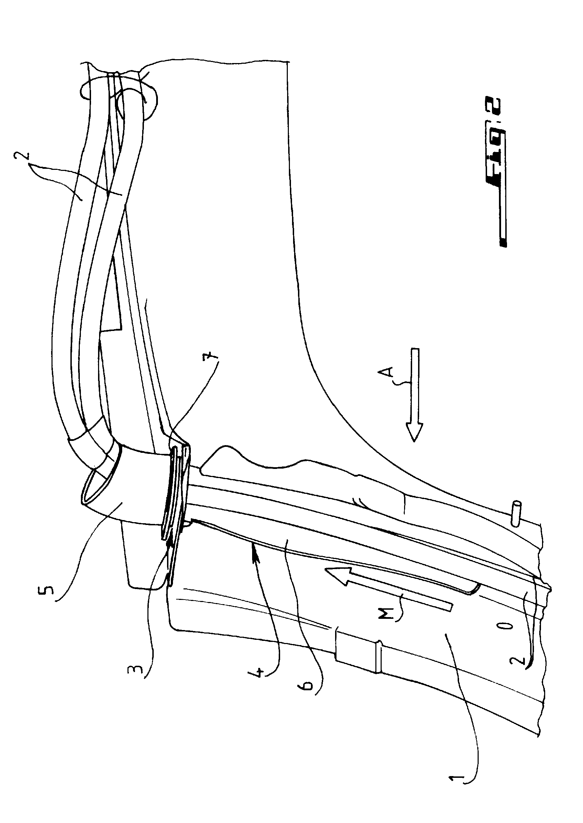

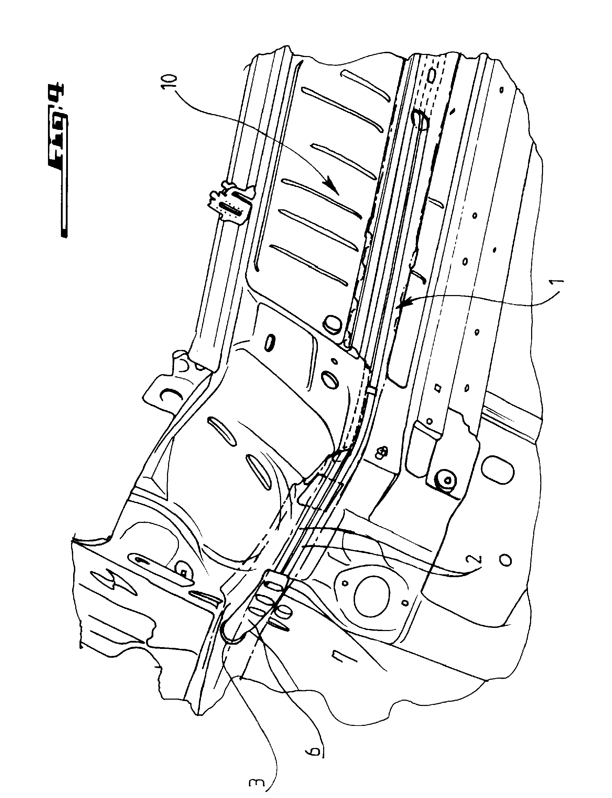

En référence plus particulièrement aux figures 2 et 3, on facilite le montage des câbles 2 selon la direction de la flèche M en faisant usage d'un protecteur, désigné par la référence générale 4.

Le protecteur 4 présente deux parties:
- une partie 5, tubulaire, traversant la section de sortie de corps creux 3, s'étendant hors de ladite sortie de corps creux 3, laquelle partie tubulaire 5 a pour fonction principale de protéger les câbles 2 des bords en tôle de l'ouverture de sortie de corps creux 3, qui peuvent être dommageables par leur tranchant, et
- une partie 6, non tubulaire, intérieure au corps creux 1, en arc d'enveloppe cylindrique, située entre les câbles 2 et la paroi interne du corps creux 1 dans la région immédiatement en amont de la sortie de corps creux 3.

La partie 6 est située par rapport aux câbles 2 du côté opposé à celui de la direction de sortie des câbles hors du corps creux 1. Ainsi, sur le dessin de la figure 2, la partie 6 du protecteur 4 se trouve sensiblement à gauche des câbles 2, tandis que les câbles 2 cheminent vers la droite hors de la sortie de corps creux 3.

La partie 6, intérieure au corps creux, est notablement plus longue que la partie 5, située dans la section de sortie de corps creux 3 et hors de celle-ci. La partie 5 peut être relativement courte, de longueur de même ordre que son diamètre. La partie 6 est de longueur plus importante, qui est de plusieurs fois la longueur de la partie 5.

Le protecteur 4 est clippé sur la structure 1 en sortie de corps creux 3, de manière connue en soi, par l'intermédiaire d'une collerette 7.

Le protecteur 4 a une double fonction:
- protéger les câbles 2 en sortie de corps creux 3 des agressions possibles des bords de la section de sortie de corps creux 3, et
- faciliter, lors de leur montage dans le corps creux 1, le guidage des câbles 2 vers la sortie de corps creux 3, et, en conséquence, faciliter leur récupération en sortie de corps creux 3.

Ainsi, en usine, le monteur fait glisser les câbles 2 à l'intérieur du corps creux 1 de la carrosserie de véhicule, dans le sens de la flèche M, et les récupère en sortie de corps creux 3.

La figure 4 illustre un bas de caisse automobile 10, et la position de câbles de puissance 2 de batterie cheminant dans un élément de carrosserie en forme de corps creux 1. Le corps creux 1 est représenté transparent de façon à bien faire apparaître les câbles de puissance 2 et leur cheminement. Immédiatement en amont de la sortie de corps creux 3, se trouve la partie 6 du protecteur 4, qui, par sa position, sa forme légèrement courbe, sa surface lisse, permet de guider les câbles 2 vers la sortie de corps creux 3.

La présente invention, en facilitant la mise en place des câbles de puissance 2 de la batterie dans l'élément de carrosserie en corps creux 1, offre l'avantage d'un gain de temps au montage.

Le protecteur selon la présente invention, comme déjà mentionné, permet de protéger les câbles 2 en sortie de corps creux 3. De plus, il peut être utilisé sur des véhicules hybrides, qui ont des batteries de puissance supérieure à 12 volts.

La présente invention perfectionne avantageusement le principe de circulation des câbles de batterie dans les corps creux de carrosserie, lequel principe est largement utilisé pour éviter les perturbations électromagnétiques liées au courant porté par ces câbles, et garantir ainsi la fiabilité des circuits électriques et électroniques du véhicule.

Et ce perfectionnement est obtenu avec un dispositif de conception simple, de fabrication facile et économique, et de montage aisé.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de protection et d'aide au montage de câbles électriques (2) dans un corps creux (1) de carrosserie d'un véhicule, **caractérisé en ce qu'**il est placé en sortie du corps creux (3), et **en ce qu'**il présente deux parties:
- une première partie (5), sensiblement tubulaire, qui s'étend dans la section de sortie de corps creux (3) et hors du corps creux et qui entoure les câbles électriques (2), de façon à les protéger des bords de la sortie de corps creux (3), et
- une seconde partie (6), qui s'étend vers l'intérieur du corps creux (1) entre la paroi interne du corps creux (1) et les câbles électriques (2), de façon à guider ces derniers vers la sortie de corps creux (3) lors de leur montage.

2. Dispositif selon la revendication 1, **caractérisé en ce qu'**il est clippé sur le corps creux (1), au niveau de la sortie de corps creux (3).

3. Dispositif selon la revendication 1, **caractérisé en ce que** ladite première partie (5) et ladite seconde partie (6) sont formées « monobloc ».

4. Dispositif selon la revendication 1, **caractérisé en ce que** ladite seconde partie (6) présente la forme d'une plaque en secteur d'enveloppe cylindrique d'angle inférieur à 180°, placée par rapport aux câbles électriques (2) du côté opposé à la direction de cheminement des câbles électriques (2) après la sortie de corps creux (3).

5. Dispositif selon l'une quelconque des revendications 1 et 3, **caractérisé en ce que** ladite seconde partie (6) est plus longue que ladite première partie (5), selon l'axe longitudinal du dispositif.

6. Dispositif selon l'une quelconque des revendications 1 à 5, **caractérisé en ce que** lesdits câbles électriques (2) sont des câbles de puissance de batterie.

7. Dispositifs selon l'une quelconque des revendications 1 à 6, **caractérisé en ce que** ledit corps creux (1) est un élément de carrosserie du véhicule choisi parmi les éléments suivants : longerons, bas de caisse, caissons de porte.

8. Dispositif selon l'une quelconque des revendications précédentes, **caractérisé en ce que** la première partie (5) est fixée au niveau de la sortie du corps creux (3) et **en ce que** la seconde partie (6) n'est pas fixée au corps creux (3).

9. Dispositif selon l'une quelconque des revendications précédentes, **caractérisé en ce que** la seconde partie (6) ne se trouve qu'immédiatement en amont de la sortie du corps creux (3).

10. Procédé de montage de câbles électriques (2) dans un corps creux (1) de carrosserie d'un véhicule, **caractérisé en ce qu'**on fait glisser les câbles électriques (2) dans le corps creux (1) jusqu'à la sortie de corps creux (3) équipée d'un dispositif de protection et d'aide au montage (4) conforme à l'une quelconque des revendications 1 à 9.
